# FASCICULE DE BREVET EUROPEEN

(11) **EP 4 590 945 B1**
(45) Date de publication et mention de la délivrance du brevet: **18.11.2026**
(21) Numéro de dépôt: 23769259.5
(22) Date de dépôt: 14.09.2023
(51) Int. Cl.: F02C 7/18

(54) **TURBOMACHINE AXIALE TRIPLE-FLUX AVEC ÉCHANGEUR DE CHALEUR ÉTANCHE DANS LE TROISIÈME FLUX**
AXIALTURBINENTRIEBWERK MIT DREI STRÖMEN UND EINEM ABGEDICHTETEN WÄRMETAUSCHER IM DRITTEN STROM
THREE-STREAM AXIAL TURBINE ENGINE WITH A SEALED HEAT EXCHANGER IN THE THIRD STREAM

(30) Priorité: 23.09.2022 FR 2209655
(43) Date de publication de la demande: 30.07.2025
(73) Titulaire: SAFRAN AIRCRAFT ENGINES, 75015 Paris (FR)
(72) Inventeur: AVOYNE, Valentin Sébastien Simon, 77920 Samois sur Seine (FR); BEUTIN, Bruno Albert, 91000 EVRY (FR); MARLIN, François Marie Paul, 77760 VILLIERS SOUS GREZ (FR)
(74) Mandataire: Ipsilon Luxembourg
(86) Numéro de dépôt international: PCT/EP2023/075324
(87) Numéro de publication internationale: WO 2024/061740

(56) Documents cités:
- US-A1- 2015 152 789
- US-A1- 2021 108 597
- US-A1- 2022 252 008
- US-A1- 2022 282 670

## Description

### Domaine technique

L'invention a trait au domaine des turbomachines et plus particulièrement des turbomachines à trois flux. L'invention porte sur l'agencement d'un échangeur de chaleur destiné au refroidissement de l'huile de la turbomachine.

### Technique antérieure

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

Dans ce contexte, l'invention porte plus particulièrement sur les aspects liés à l'agencement des échangeurs de chaleur dans les turbomachines. En effet, dans une turbomachine, il est généralement nécessaire de refroidir l'huile du circuit de lubrification. Il est connu de disposer un ou plusieurs échangeur(s) de chaleur dans le flux tertiaire d'une turbomachine à trois flux, c'est-à-dire dans le flux radialement intermédiaire entre le flux primaire dirigé vers la chambre de combustion et le flux secondaire, externe.

L'intégration d'un échangeur dans le troisième flux, confiné entre le flux primaire et le flux secondaire, pose des difficultés de montage et d'accessibilité en cas de maintenance, mais aussi des contraintes liées à l'étanchéité en fonctionnement dues à la dilatation thermique de l'échangeur. Un échangeur du type « brique » inspiré du document FR 3 089 248 A1 ne répond pas à ces contraintes et n'est donc pas adapté pour le troisième flux.

L'intégration d'un échangeur dans un troisième flux d'une turbomachine à trois flux présente donc des défis liés à son encombrement, son assemblage, son accessibilité, son fonctionnement et également la masse globale des moyens employés pour le fixer au carter.

Des solutions ont déjà été proposées pour améliorer le refroidissement d'huile ou l'intégration d'échangeurs dans les turbomachines.

Le document de brevet publié US 2022/0282670 A1 divulgue l'intégration d'un échangeur de chaleur dans une architecture de turbomachine, en particulier la disposition de circuits de refroidissement d'huile dans des zones internes du moteur.

Le document de brevet publié US 2021/0108597 A1 illustre l'intégration d'un échangeur de chaleur dans un flux secondaire de turbomachine afin d'optimiser les échanges thermiques.

Le document de brevet publié US 2015/0152789 A1 décrit différentes configurations d'échangeurs thermiques pour moteurs d'aéronefs, notamment des circuits de refroidissement d'huile à géométrie compacte.

Enfin, le document de brevet publié US 2022/0252008 A1 décrit un système de propulsion comprenant différents sous-ensembles de compression et des dispositifs de gestion thermique intégrés, incluant notamment des échangeurs de chaleur associés au circuit moteur.

Ces différentes approches témoignent de l'intérêt croissant pour l'optimisation de l'intégration des échangeurs dans les turbomachines, mais ne répondent pas entièrement aux contraintes d'encombrement, de masse, de rendement et de sécurité évoquées ci-dessus.

### Exposé de l'invention

### Problème technique

La présente invention a pour objectif de pallier au moins un des inconvénients de l'état de la technique susmentionné. Plus particulièrement, l'invention a pour objectif de proposer une solution simple, performante et économique visant à résoudre les inconvénients de la conception/fabrication des turbomachines de l'état de la technique. En particulier, l'invention vise à proposer une solution qui permette un refroidissement efficace dans un encombrement restreint tout en garantissant l'accessibilité de l'échangeur lors d'une opération de maintenance, et en garantissant une étanchéité convenable et la sûreté de la turbomachine en cas de feu, mais aussi sans rajout de masse et sans entrave du rendement de la turbomachine.

### Solution technique

Pour cela, la présente invention a pour objet une turbomachine, comprenant :
- un premier bec de séparation apte à séparer un flux d'air entrant en un flux d'air radialement interne et un flux d'air radialement externe, dit flux secondaire ;
- un deuxième bec de séparation apte à séparer le flux d'air radialement interne en un flux primaire et un flux tertiaire, ce dernier parcourant une veine de flux tertiaire radialement externe à une veine de flux primaire parcourue par le flux primaire ;
- un échangeur de chaleur disposé dans la veine de flux tertiaire ; et
- un carter interne ;

la turbomachine étant caractérisée en ce que
l'échangeur comprend un corps et une bride s'étendant radialement intérieurement et en saillie du corps, la bride étant fixée au carter interne, l'échangeur comprenant en outre, en amont de la bride, une partie amont comprenant une collerette s'étendant en saillie et vers l'amont depuis le corps de l'échangeur, ladite collerette étant reçue de façon flottante dans une rainure s'étendant circonférentiellement dans le carter interne.

De façon avantageuse, le montage de la collerette dans la rainure est dépourvu de toute fixation et évite de créer des zones de contraintes mécaniques lorsque l'échangeur subit des dilations thermiques. A cet effet, le montage flottant de la collerette dans la rainure autorise des déformations de dilatation suivant les directions axiale, radiale et circonférentielle.

Préférentiellement, une partie aval de l'échangeur comprend une gorge s'étendant circonférentiellement, la turbomachine comprenant en outre une virole interne de la veine de flux tertiaire qui comprend une portion amont reçue dans la gorge.

La virole interne ainsi que le carter interne correspondent, de préférence, à un capotage inter-aube de la turbomachine qui est disposé entre la veine de flux primaire et la veine de flux tertiaire. Avantageusement, le carter et la virole interne sont dans une continuité aérodynamique avec la veine de flux tertiaire, et constituent, de préférence, une paroi de guidage radialement interne du flux tertiaire.

De façon avantageuse, le montage de la portion amont de la virole dans la gorge est flottant et dépourvu de toute fixation. Cela permet d'éviter la création de zones de contraintes mécaniques lorsque l'échangeur subit des dilations thermiques, de manière à autoriser des déformations de dilatation suivant les directions axiale, radiale et circonférentielle.

Selon un mode avantageux de l'invention, la bride de fixation s'étend circonférentiellement sur au plus 50% d'une étendue circonférentielle de l'échangeur.

Selon un mode avantageux de l'invention, la bride de fixation est disposée dans une position centrale de l'échangeur, suivant une direction circonférentielle.

Avantageusement, la bride étant centrée circonférentiellement sur l'échangeur, celle-ci permet de laisser libre champ aux dilatations thermiques de l'échangeur en permettant à ce dernier de s'étendre tangentiellement dans la veine de flux tertiaire.

Selon un mode avantageux de l'invention, la bride est fixée au carter au moyen d'éléments de fixation permettant une fixation en aveugle.

Dans cette configuration, l'échangeur est avantageusement monté directement dans la rainure du carter interne, un tel montage est réalisé de l'aval vers l'amont, et par simple insertion, facilitant ainsi l'accessibilité de l'échangeur et sa maintenabilité.

Selon un mode avantageux de l'invention, la turbomachine comprend un premier joint isolant thermique disposé dans la rainure et interposé entre le carter et l'échangeur.

Ce joint permet de garantir l'étanchéité entre l'échangeur et le carter interne, de manière à éviter des fuites d'air dans un compartiment inter-veines, tout en évitant le rajout d'éléments de fixation de la partie amont de l'échangeur au carter qui aurait pour but de rigidifier l'échangeur et d'empêcher sa déformation.

Préférentiellement, la turbomachine comprend un deuxième joint isolant thermique disposé dans la gorge et interposé entre l'échangeur et la virole.

Le deuxième joint permet de limiter la déformation de la virole qui apparaîtrait du fait de la conduction thermique avec un échangeur chaud. Ainsi, on s'affranchit d'éléments de fixation de la virole au carter qui auraient pour but de rigidifier la virole et d'empêcher sa déformation.

Selon un mode avantageux de l'invention, la turbomachine comprend des bras structuraux s'étendant radialement au travers de la veine de flux tertiaire et délimitant entre eux des espaces inter-bras, la turbomachine comprenant un échangeur de chaleur dans chaque espace inter-bras, chacun des échangeurs comprenant un corps et une bride s'étendant radialement intérieurement et en saillie du corps respectif, chaque bride étant fixée au carter interne, et chacun des échangeurs comprenant, en outre, un joint isolant thermique latéral interposé entre l'échangeur et le bras structural adjacent.

Dans cette configuration, le joint latéral est apte à garantir l'étanchéité de l'échangeur suivant la direction circonférentielle dans la veine, notamment lors d'une contraction de l'échangeur dans l'espace inter-veines suite à une dilation dudit échangeur. Le joint latéral permet d'absorber des écarts circonférentiels entre l'échangeur et le bras structural de manière à ce que ledit joint reste toujours en contact et de manière étanche avec le bras structural.

Selon un mode avantageux de l'invention, chacun des échangeurs comprenant le premier joint et deux joints isolant thermique latéraux, lesdits joints latéraux étant intégralement formés avec le premier joint.. A cet effet, les premiers joints garantissent, avec les bras structuraux, l'étanchéité et l'isolation thermique sur 360° autour de l'axe longitudinal.

Préférentiellement, le deuxième joint isolant thermique est commun à tous les échangeurs et s'interpose entre les échangeurs et la virole. Avantageusement, le deuxième joint garantit l'étanchéité et l'isolation thermique sur 360° autour de l'axe longitudinal.

Selon un mode avantageux de l'invention, la bride est disposée dans une moitié aval de l'échangeur, et en aval de ladite bride, l'échangeur comprend en outre, une partie aval à laquelle est rapportée une paroi feu formant un bouclier thermique.

Préférentiellement, la partie aval a une longueur axiale comprise entre 20% et 50% de la longueur axiale de l'échangeur. Cela permet de faciliter le montage/démontage par l'aval, car la bride est facilement accessible, sans déséquilibrer mécaniquement le montage en porte-à-faux de la partie aval de l'échangeur.

Avantageusement, la paroi feu correspond à une paroi coupe-feu permettant de retarder la propagation d'un éventuel feu depuis la veine de flux primaire (depuis la chambre de combustion par exemple), vers le reste de l'aéronef (vers la nacelle de l'aéronef). Le fait de rapporter la paroi feu à l'échangeur permet un gain de l'encombrement global mais aussi facilite la maintenance de ces éléments car une fixation additionnelle pour la paroi feu n'est plus nécessaire.

L'invention a également trait à un procédé de dépose d'un échangeur dans une turbomachine selon l'un des modes avantageux de l'invention mentionnés ci-dessus, le procédé comprenant les étapes suivantes :
- démontage des éléments de fixation de la bride au carter ;
- dépose de l'échangeur par un déplacement axialement vers l'aval.

Avantageusement, la dépose de l'échangeur est en partie facilitée au moyen de la collerette siégeant de manière flottante dans la rainure et ne nécessitant qu'un simple retrait manuel vers l'aval.

L'invention a également trait à un procédé de pose d'un échangeur dans une turbomachine selon l'un des modes avantageux de l'invention mentionnés ci-dessus, le procédé comprenant les étapes suivantes :
- pose de l'échangeur par un déplacement axialement vers l'amont ;
- fixation des éléments de fixation de la bride au carter.

### Avantages de l'invention

L'échangeur, en plus d'être apte à efficacement refroidir l'huile par l'échange des calories avec l'air, permet d'assurer davantage de fonctions, tels que : l'agencement d'une paroi feu tout en garantissant l'étanchéité et la constitution d'un support de maintien pour la virole. Dans cette configuration, le nombre de pièces intermédiaires qui auraient été introduites pour répondre séparément aux différentes fonctions requises est fortement réduit, permettant ainsi de réduire la masse et le coût de fabrication de la turbomachine de l'invention. A cet effet, le montage et le démontage de l'échangeur sont facilités, ce qui permet ainsi d'améliorer la maintenabilité de la turbomachine.

De plus, l'invention est particulièrement avantageuse, car le positionnement de l'échangeur au niveau de la veine du flux tertiaire permet d'éviter d'entraver le rendement du moteur. Ceci se traduit par une efficacité énergétique et une poussée optimisée qui avantageusement permettent de réduire la consommation de carburant et les émissions des gaz carboniques à effet de serre, réduisant ainsi l'impact environ-nemental des avions.

Il est entendu que chaque détail d'un mode de réalisation ci-dessous peut être combiné à chaque autre détail des autres modes de réalisation.

### Brève description des dessins

[Fig.1] représente une vue en coupe longitudinale d'une turbomachine selon l'invention, ladite turbomachine comprenant un échangeur de chaleur dans une veine de flux tertiaire ;
[Fig.2] représente une vue de face de la veine de flux tertiaire de la [Fig.1] comprenant plusieurs échangeurs de chaleur ;
[Fig.3] représente une vue en coupe d'un montage de l'échangeur sur un carter interne et d'une virole interne sur ledit échangeur ;
[Fig.4] représente une vue en perspective de l'échangeur comprenant un joint isolant thermique.

### Description détaillée

Dans la description qui va suivre, les termes « interne » et « externe » renvoient à un positionnement par rapport à l'axe longitudinal de rotation d'une turbomachine. La direction axiale correspond à la direction le long de l'axe longitudinal de rotation de la turbomachine. La direction radiale est perpendiculaire à l'axe longitudinal. L'amont et l'aval sont en référence au sens d'écoulement d'un flux dans la turbomachine.

Les figures montrent les éléments de manière schématique et ne sont pas représentées à l'échelle. En particulier, certaines dimensions sont agrandies pour faciliter la lecture des figures.

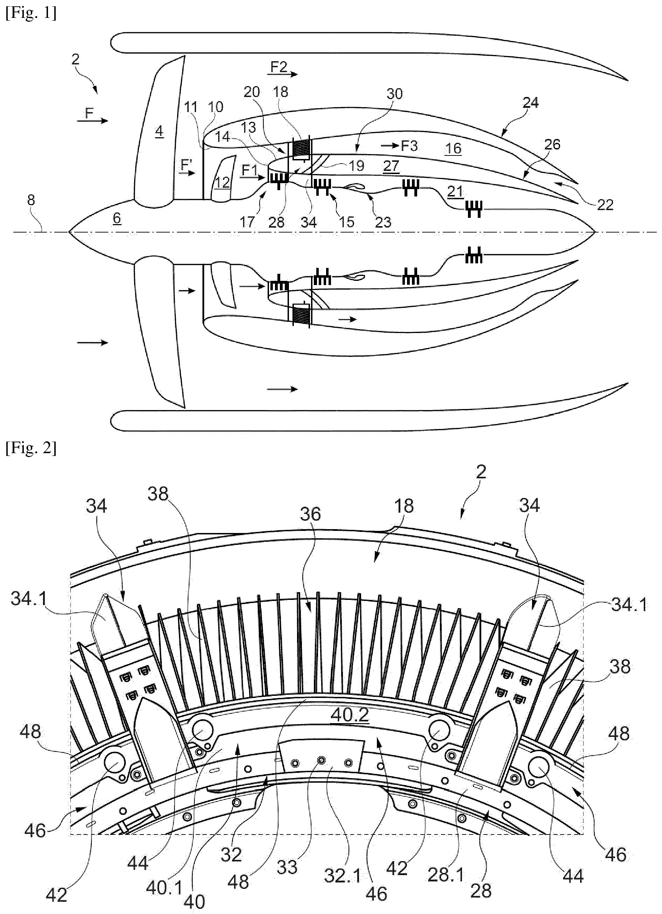

La [Fig.1] illustre une turbomachine 2 comprenant une hélice 4 solidaire d'un moyeu 6 tournant autour d'un axe longitudinal 8.

La turbomachine 2 évolue dans un flux d'air F dont le mouvement relatif à la turbomachine 2 est généré par la rotation de l'hélice 4 et l'avancement de l'aéronef sur laquelle la turbomachine 2 est montée.

Le flux d'air F est séparé par un premier bec de séparation 10 en un flux d'air radialement interne F' et un flux d'air radialement externe F2, dit flux secondaire F2. L'hélice 4 peut être disposée en amont du premier bec de séparation 10 ou en aval.

Le flux d'air radialement interne F' traverse une roue mobile 12 qui dirige ce dernier vers un deuxième bec de séparation 14 apte à séparer le flux d'air radialement interne F' en un flux primaire F1 et un flux tertiaire F3, ce dernier est distinct du flux secondaire F2.

Le premier bec de séparation 10 comprend une paroi interne formant une première paroi de guidage externe 11 du flux d'air radialement interne F', ladite première paroi de guidage externe 11 formant un profil convexe vu depuis ledit flux d'air radialement interne F'.

Le deuxième bec de séparation 14 comprend une paroi externe formant une deuxième paroi de guidage externe 13 du flux d'air radialement interne F' ayant traversé la roue mobile 12, ladite deuxième paroi de guidage externe 13 formant un profil convexe vu depuis le flux tertiaire F3. A cet effet, la deuxième paroi de guidage externe 13 correspond à une paroi de guidage radialement interne 13 du flux tertiaire F3.

Le flux tertiaire F3 pénètre dans une veine de flux tertiaire 16 radialement externe audit flux primaire F1. Le flux tertiaire F3 traverse un échangeur de chaleur 18 disposé dans la veine de flux tertiaire 16.

L'échangeur de chaleur 18 s'étend radialement et axialement dans la veine de flux tertiaire 16, et préférentiellement dans un tronçon amont 20 de la veine de flux tertiaire 16, présentant une section longitudinale divergente dans le sens de l'écoulement du flux tertiaire F3.

L'échangeur de chaleur 18 est disposé axialement environ entre le compresseur haute pression 15 et le compresseur basse pression 17 dit, « booster » 17, au droit d'un carter inter-compresseur.

Les compresseurs haute pression 15 et basse pression 17 comprennent des aubes tournantes et des aubes de redresseur disposées dans une veine de flux primaire 21 traversée par le flux primaire F1, ce dernier se dirigeant vers une chambre de combustion 23.

Un canal « VBV » 19 (Variabe Bleed Valve) débouche axialement en aval de l'échangeur de chaleur 18 dans la veine tertiaire 16. Il permet d'assurer une fonction de décharge en renvoyant une partie du flux primaire F1 vers le flux tertiaire F3 pour éviter le bourrage du compresseur haute pression 15 lorsque le débit du flux primaire F1 devient trop faible.

L'échangeur de chaleur 18 peut s'étendre de manière continue sur 360° dans le tronçon amont 20 de la veine 16 autour de l'axe longitudinal 8 de la turbomachine 2. Préférentiellement, la turbomachine 2 comprend plusieurs échangeurs de chaleur 18 s'étendant dans la veine de flux tertiaire 16 et subdivisant la veine angulairement de manière discontinue sur 360° autour de l'axe longitudinal 8. Chacun desdits échangeurs peut assurer indépendamment une fonction d'échange thermique entre l'air et un fluide.

Un seul échangeur de chaleur 18 peut combiner le refroidissement de plusieurs fonctions ou circuits d'huile de la turbomachine, et cela en fonction de différents paramètres liées au besoin de refroidissement de l'huile, *i.e.,* températures d'entrée, débits, température de sortie demandée ou les conditions de l'air, les différents circuits peuvent être mis en contact thermique ou bien isolés. L'échangeur 18 et en particulier ses passages d'huile peuvent supporter une température basse de l'huile pouvant atteindre -54°C.

Le tronçon amont 20 de la veine de flux tertiaire 16 comprend un carénage externe 24 et un capotage inter-veines 26, au moins un des carénage externe 24 et capotage inter-veines 26 étant rigidement lié à l'échangeur 18. Préférentiellement, le capotage inter-veines 26 est fixé à l'échangeur 18. Une telle fixation sera détaillée plus loin dans la présente description.

Le capotage inter-veines 26 comprend un carter interne 28, disposé axialement entre le compresseur haute pression 15 et le compresseur basse pression 17, et comprend, en outre, une virole interne 30 disposée en aval de l'échangeur 18. Dans cette configuration, le carter interne 28 et la virole interne 30 constituent, avec l'échangeur 18, la paroi de guidage radialement interne du flux tertiaire F3.

La [Fig.2] est une vue de face, *i.e.* dans le sens contraire à l'écoulement de l'air, de la veine de flux tertiaire 16 de la [Fig.1] comprenant plusieurs échangeurs de chaleur 18. On peut voir que les échangeurs 18 sont répartis angulairement dans la veine de flux tertiaire 16.

La turbomachine 2 comprend des bras structuraux 34 s'étendant radialement au travers de la veine de flux tertiaire 16 et délimitant entre eux des espaces inter-bras 36. Préférentiellement, la turbomachine 2 comprend entre 2 et 20 bras structuraux 34.

Parallèlement, la virole intérieure peut être monobloc et circonférentiellement continue sur 360°, ou ladite virole peut être subdivisée en plusieurs viroles internes allant jusqu'à 5 viroles.

L'échangeur 18 est préférentiellement obtenu par fabrication additive, ledit échangeur 18 s'étendant circonférentiellement entre deux bras structuraux 34 dans chaque espace inter-bras 36.

L'échangeur 18 comprend des surfaces d'échange thermique 38 correspondant à des passages d'huile et/ou des surfaces d'échange thermique avec l'air s'étendant radialement et axialement dans l'espace inter-bras 36. Un exemple de conceptions possibles est détaillé dans les demandes de brevet BE2021/5978, BE2021/5979, BE2021/5980, BE2021/5982 et BE2021/5983, la conception des surfaces d'échange thermique 38 ou des passages internes de l'huile n'étant pas le cœur de la présente invention.

L'échangeur 18 comprend un corps 32 avec une bride 32.1 s'étendant radialement intérieurement et en saillie dudit corps 32, de manière à ce que la bride 32.1 vienne se fixer à une bride annulaire 28.1 appartenant au carter interne 28. Ladite bride annulaire 28.1 est préférentiellement continue sur 360° autour de l'axe longitudinal de la turbomachine alors que la bride 32.1 de l'échangeur 18 a préférentiellement une étendue restreinte : la bride 32.1 est dans une position centrale par rapport au corps 32, suivant la direction circonférentielle. Cela permet avantageusement de laisser libre champ aux dilatations thermiques de l'échangeur 18 en permettant à ce dernier de s'étendre tangentiellement dans l'espace inter-bras 36.

Le sens de montage de l'échangeur 18 dans la turbomachine est préférentiellement d'aval en amont. Dans cette configuration, la fixation de l'échangeur 18 au carter interne 28 peut être assurée par vissage. Ainsi, la bride 32.1 peut être fixée à la bride annulaire 28.1 au moyen de deux à six vis et/ou boulons 33, et plus préférentiellement au moyen de trois vis 33.

Préférentiellement, les trois vis 33 sont circonférentiellement groupées de manière à réaliser un encastrement de la bride 32.1 au centre de l'échangeur 18 pour libérer tangentiellement au moins 50% de l'étendue circonférentielle dudit échangeur 18.

L'échangeur 18 comprend également une partie aval 40 disposée en aval de la bride 32.1 et donc montée en porte-à-faux. Cette partie aval 40 présente une surface interne avec un profil interne 40.1 par exemple cylindrique ou conique autour de l'axe longitudinal de la turbomachine, et une surface aval ayant un profil aval 40.2 sensiblement perpendiculaire à l'axe longitudinal. Alternativement, la forme de la partie aval 40 peut être plus libre, comme inspiré du document EP 3 674 531 A1.

Préférentiellement, la surface aval 40.2 de l'échangeur 18 comprend une arrivée d'huile 42 à une extrémité angulaire du corps 32, et une sortie d'huile 44 à une extrémité circonférentiellement opposée.

L'arrivée d'huile 42 et la sortie d'huile 44 sont reliées de manière fluidique à un collecteur d'huile et à un distributeur d'huile disposés dans une partie interne du corps 32 de l'échangeur 18 (non illustrée). Préférentiellement, la partie interne du corps 32 peut être creuse et dépourvue de matière (mis à part les collecteur et distributeur d'huile et les liaisons fluidiques), de manière à alléger l'échangeur 18.

La partie aval 40 comprend également sur sa surface aval 40.2 une gorge 48 s'étendant circonférentiellement sur toute l'étendue circonférentielle de la partie aval 40. Cela permet à la virole interne 30 du capotage inter-veines 26 de la [Fig.1] d'être supporté par l'échangeur 18.

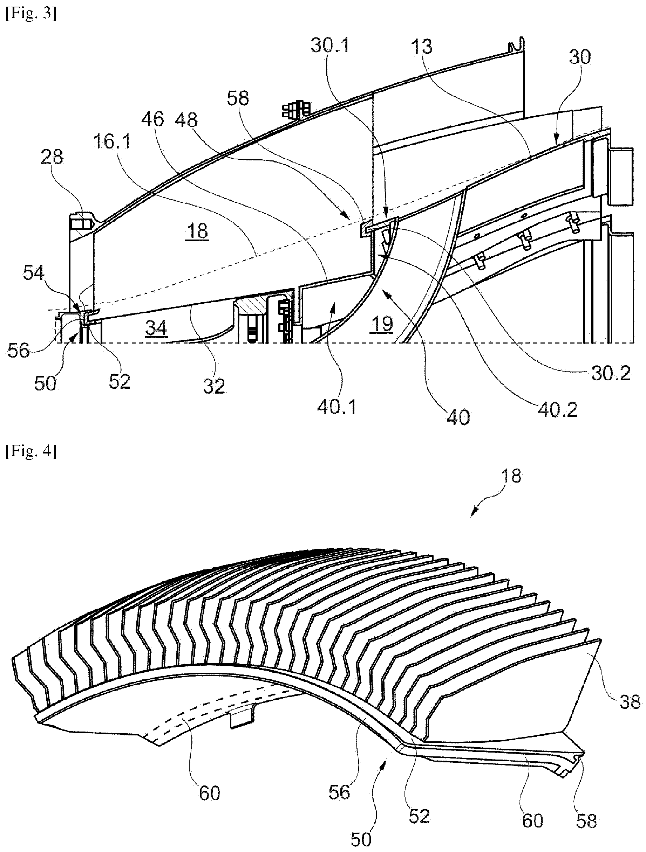

La [Fig.3] représente une vue en coupe d'un montage de l'échangeur 18 sur le carter interne 28 et de la virole interne 30 sur ledit échangeur 18.

On peut voir que l'échangeur comprend une partie amont 50 ayant une collerette 52 s'étendant en saillie et vers l'amont depuis le corps 32 de l'échangeur 18, la collerette 52 étant reçue de façon flottante, et dépourvue de toute fixation, dans une rainure 54 s'étendant circonférentiellement dans le carter interne 28. La collerette 52 peut décrire une portion d'anneau de rayon constant par rapport à l'axe 8 de la turbomachine. Alternativement, la collerette 52 peut présenter des variations de rayons et la rainure 54 peut avoir un profil correspondant, afin d'indexer angulairement l'échangeur lors de son montage.

Avantageusement, la collerette 52 est disposée de manière sensiblement affleurante à la paroi de guidage radialement interne 13, de manière à suivre la ligne aérodynamique 16.1 du flux d'air dans la veine de flux tertiaire 16 illustrée à la [Fig.1].

Dans cette configuration, l'échangeur 18 est apte à être fixé en aveugle sur le carter interne 28 de la turbomachine. Le document de brevet publié EP 3 441 579 A1 divulgue un exemple d'un montage en aveugle sur une turbomachine qui peut être employé ici.

La fixation en aveugle peut s'avérer astucieuse puisque l'échangeur 18 est installé par un déplacement axial vers l'amont jusqu'à l'insertion de la collerette 52 dans la rainure 54, et jusqu'au contact de la bride amont 28.1 avec la bride 32.1. Il n'y a donc pas d'accès depuis l'amont pour maintenir un écrou immobile avec un outillage, et un montage à l'aveugle permet de s'affranchir d'une contrainte de conception côté amont.

La turbomachine comprend un premier joint isolant thermique 56 disposé dans la rainure 54 et interposé entre le carter 28 et l'échangeur 18.

On peut également voir sur la [Fig.3], une portion amont 30.1 de la virole 30 insérée dans la gorge 48. Dans cette configuration, un deuxième joint isolant thermique 58 est interposé dans la gorge 48 entre la virole 30 et l'échangeur 18.

Préférentiellement, les premier 56 et deuxième joint 58 sont fabriqués à partir d'un polyimide Vespel^{®} disponible chez DuPont^{™}. Avantageusement, le polyimide Vespel^{®} est résistant au craquement à de très hautes températures avec d'excellentes caractéristiques de friction et d'usure, et ne produit pas de dégagement de gaz significatif même lors de températures élevées.

Avantageusement, les premier et deuxième joints 56, 58 ont des propriétés mécaniques élastiques leur permettant d'absorber une partie des dilatations thermiques de l'échangeur 18 dans les directions axiale et radiale, de manière à éviter une propagation des contraintes mécaniques vers le carter 28 et la virole 30 et se prémunir de tout risque de déformation et/ou de craquement.

Dans la configuration illustrée à la [Fig.2], les premier et deuxième joints 56, 58 s'interposent, respectivement, entre les échangeurs 18 et le carter 28, et entre la virole interne 30 et lesdits échangeurs 18.

Le montage de la virole 30 dans la gorge 48 est un montage flottant et dépourvu de toute fixation, permettant, en cas de dilatations thermiques de l'échangeur 18, de protéger la virole 30 de toute déformation en autorisant des dilatations dans la gorge 48 suivant les directions axiale, radiale et circonférentielle.

De plus, l'étanchéité de l'assemblage de la virole 30 et de l'échangeur 18 est garantie. Ce qui permet d'éviter tout risque de fuites d'air vers le compartiment inter-veines 27 de la [Fig.1].

Dans cette configuration, et en référence aux figures 1 et 3, l'échangeur 18 est apte à être facilement déposé en procédant à l'ouverture du carénage externe 24 et à l'ouverture du capotage inter-veines 26 en démontant la virole 30 (préférentiellement par déplacement axial vers l'aval), des canalisations reliées à l'échangeur 18 peuvent être retirées. A ce stade, les vis de fixation de la bride 32.1 sur le carter 28 peuvent être démontées, et l'échangeur 18 peut être déplacé axialement vers l'aval par retrait manuel.

Avantageusement, le désengagement de la collerette 52 depuis la rainure 56 est simple du fait que le montage de ces deux derniers est réalisé de façon flottante et sans fixation additionnelle.

De préférence, l'échangeur 18 comprend, en outre, et au droit de la partie aval 40, une paroi feu 46 formant un bouclier thermique permettant de retarder la propagation d'un éventuel feu depuis la veine de flux primaire vers le reste de la turbomachine.

La paroi feu 46 peut épouser le profil interne 40.1 et le profil aval 40.2 de la partie aval 40, et peut également s'étendre radialement sur la bride 32.1 et jusqu'à la gorge 48. De façon avantageuse, et outre la protection de la turbomachine d'une propagation de feu, la paroi feu 46 permet de protéger la virole 30 des températures élevées de l'échangeur 18.

La paroi feu 46 correspond, de préférence, à une couche en matériau isolant tel qu'un plastique à performances élevées. Plus préférentiellement, la paroi feu 46 est en polyimide Vespel^{®} similairement au joints 56, 58.

La [Fig.4] représente une vue en perspective de l'échangeur 18 comprenant un joint isolant thermique latéral 60 pouvant être interposé entre chaque côté latéral de l'échangeur 18 et le bras structural adjacent (dans la configuration de la [Fig.2]).

Préférentiellement, le joint latéral 60 est du même matériau que le premier joint 56, et il est avantageusement apte à garantir l'étanchéité de l'échangeur 18 suivant la direction circonférentielle dans la veine en absorbant des écarts circonférentiels entre l'échangeur 18 et le bras structural adjacent. Ainsi, le joint latéral 60 reste toujours en contact du bras structural afin de garantir l'étanchéité et l'isolation thermique du bras structural correspondant.

Avantageusement, chaque échangeur 18 comprend le premier joint 56, le deuxième joint 58, et deux joints latéraux 60. A cet égard, lesdits joints 56, 58, 60 peuvent correspondre à un seul et même joint.

Dans cette configuration, le joint commun reste solidaire du corps de l'échangeur et peut être avantageusement démonté en même temps que l'échangeur 18. Une inspection visuelle dudit joint commun pourra alors être faite à chaque démontage de l'échangeur 18, le remplacement dudit joint sera ainsi facilité.

## Revendications

1. Turbomachine (2), comprenant :
- un premier bec de séparation (10) apte à séparer un flux d'air (F) entrant en un flux d'air radialement interne (F') et un flux d'air radialement externe (F2), dit flux secondaire (F2) ;
- un deuxième bec de séparation (14) apte à séparer le flux d'air radialement interne (F') en un flux primaire (F1) et un flux tertiaire (F3), ce dernier parcourant une veine de flux tertiaire (16) radialement externe à une veine de flux primaire (16) parcourue par le flux primaire (F1) ;
- un échangeur de chaleur (18) disposé dans la veine de flux tertiaire (16) ; et
- un carter interne (28) ;
la turbomachine (2) étant **caractérisée en ce que**
l'échangeur (18) comprend un corps (32) et une bride (32.1) s'étendant radialement intérieurement et en saillie du corps (32), la bride étant fixée au carter interne (28), l'échangeur (18) comprenant en outre, en amont de la bride (32.1), une partie amont (50) comprenant une collerette (52) s'étendant en saillie et vers l'amont depuis le corps (32) de l'échangeur (18), ladite collerette (52) étant reçue de façon flottante dans une rainure (54) s'étendant circonférentiellement dans le carter interne (28).

2. Turbomachine (2) selon la revendication 1, **caractérisée en ce que** la bride (32.1) de fixation s'étend circonférentiellement sur au plus 50% d'une étendue circonférentielle de l'échangeur (18).

3. Turbomachine (2) selon l'une des revendications 1 et 2, **caractérisée en ce que** la bride (32.1) de fixation est disposée dans une position centrale de l'échangeur (18), suivant une direction circonférentielle.

4. Turbomachine (2) selon l'une des revendications 1 à 3, **caractérisée en ce que** la bride (32.1) est fixée au carter (28) au moyen d'éléments de fixation (33) permettant une fixation en aveugle.

5. Turbomachine (2) selon l'une des revendications 1 à 4, **caractérisée en ce qu'**elle comprend un premier joint (56) isolant thermique disposé dans la rainure (54) et interposé entre le carter (28) et l'échangeur (18).

6. Turbomachine (2) selon l'une des revendications 1 à 5, **caractérisée en ce qu'**elle comprend des bras structuraux (34) s'étendant radialement au travers de la veine de flux tertiaire (16) et délimitant entre eux des espaces (36) inter-bras, la turbomachine (2) comprenant un échangeur (18) de chaleur dans chaque espace (36) inter-bras, chacun des échangeurs (18) comprenant un corps (32) et une bride (32.1) s'étendant radialement intérieurement et en saillie du corps (32) respectif, chaque bride (32.1) étant fixée au carter interne (32), et chacun des échangeurs (18) comprenant, en outre, un joint (60) isolant thermique latéral interposé entre l'échangeur (18) et le bras structural (34) adjacent.

7. Turbomachine (2) selon les revendications 5 et 6, **caractérisée en ce que** chacun des échangeurs (18) comprenant le premier joint (56) et deux joints (60) isolant thermique latéraux, lesdits joints latéraux (60) étant intégralement formés avec le premier joint (56).

8. Turbomachine (2) selon l'une des revendications 1 à 7, **caractérisée en ce que** la bride (32.1) est disposée dans une moitié aval de l'échangeur (18), et en aval de ladite bride (32.1), l'échangeur (18) comprend en outre, une partie aval (40) à laquelle est rapportée une paroi feu (46) formant un bouclier thermique.

9. Procédé de dépose d'un échangeur (18) dans une turbomachine (2) selon l'une des revendications 1 à 8, le procédé comprenant les étapes suivantes :
- démontage des éléments de fixation (33) de la bride (32.1) au carter (28) ;
- dépose de l'échangeur (18) par un déplacement axialement vers l'aval.

10. Procédé de pose d'un échangeur (18) dans une turbomachine (2) selon l'une des revendications 1 à 8, le procédé comprenant les étapes suivantes :
- pose de l'échangeur (18) par un déplacement axialement vers l'amont ;
- fixation des éléments de fixation (33) de la bride (32.1) au carter (28).

## Patentansprüche

1. Turbomaschine (2), umfassend:
- einen ersten Trennsteg (10), der geeignet ist, einen einströmenden Luftstrom (F) in einen radial inneren Luftstrom (F') und einen radial äußeren Luftstrom (F2), genannt Sekundärstrom (F2), zu trennen;
- einen zweiten Trennsteg (14), der geeignet ist, den radial inneren Luftstrom (F') in einen Primärstrom (F1) und einen Tertiärstrom (F3) zu trennen, wobei letzterer einen Tertiärstrom-Kanal (16) durchströmt, der radial außerhalb eines Primärstrom-Kanals (16) angeordnet ist, der von dem Primärstrom (F1) durchströmt wird;
- einen Wärmetauscher (18), der in dem Tertiärstrom-Kanal (16) angeordnet ist; und
- ein Innengehäuse (28);
wobei die Turbomaschine (2) **dadurch gekennzeichnet ist, dass**
der Wärmetauscher (18) einen Körper (32) und einen Flansch (32.1) umfasst, der sich radial nach innen und vorspringend von dem Körper (32) erstreckt, wobei der Flansch an dem Innengehäuse (28) befestigt ist, und dass der Wärmetauscher (18) ferner, stromaufwärts des Flansches (32.1), einen stromaufwärtigen Abschnitt (50) umfasst, der einen Kragen (52) umfasst, der sich vorspringend und stromaufwärts von dem Körper (32) des Wärmetauschers (18) erstreckt, wobei der Kragen (52) schwimmend in einer Nut (54) aufgenommen ist, die sich umfangsseitig in dem Innengehäuse (28) erstreckt.

2. Turbomaschine (2) nach Anspruch 1, **dadurch gekennzeichnet, dass** der Befestigungsflansch (32.1) sich umfangsseitig über höchstens 50 % einer umfangsseitigen Ausdehnung des Wärmetauschers (18) erstreckt.

3. Turbomaschine (2) nach einem der Ansprüche 1 und 2, **dadurch gekennzeichnet, dass** der Befestigungsflansch (32.1) in einer mittigen Position des Wärmetauschers (18) in einer umfangsseitigen Richtung angeordnet ist.

4. Turbomaschine (2) nach einem der Ansprüche 1 bis 3, **dadurch gekennzeichnet, dass** der Flansch (32.1) an dem Gehäuse (28) mittels Befestigungselementen (33) befestigt ist, die eine Blindbefestigung ermöglichen.

5. Turbomaschine (2) nach einem der Ansprüche 1 bis 4, **dadurch gekennzeichnet, dass** sie eine ersten thermisch isolierenden Dichtung (56) umfasst, die in der Nut (54) angeordnet und zwischen dem Gehäuse (28) und dem Wärmetauscher (18) zwischengeschaltet ist.

6. Turbomaschine (2) nach einem der Ansprüche 1 bis 5, **dadurch gekennzeichnet, dass** sie strukturelle Arme (34) umfasst, die sich radial durch den Tertiärstrom-Kanal (16) erstrecken und zwischen sich Zwischenräume (36) zwischen den Armen begrenzen, wobei die Turbomaschine (2) einen Wärmetauscher umfasst
(18) in jedem Zwischenraum (36) zwischen den Armen, wobei jeder der Wärmetauscher (18) einen Körper (32) und einen Flansch (32.1) umfasst, der sich radial nach innen und vorspringend von dem jeweiligen Körper (32) erstreckt, wobei jeder Flansch (32.1) an dem Innengehäuse (28) befestigt ist, und wobei jeder der Wärmetauscher (18) ferner eine seitliche, thermisch isolierende Dichtung (60) umfasst, die zwischen dem Wärmetauscher (18) und dem benachbarten strukturellen Arm (34) zwischengeschaltet ist.

7. Turbomaschine (2) nach den Ansprüchen 5 und 6, **dadurch gekennzeichnet, dass** jeder der Wärmetauscher (18) die erste Dichtung (56) und zwei seitliche, thermisch isolierende Dichtungen (60) umfasst, wobei die seitlichen Dichtungen (60) integral mit der ersten Dichtung (56) ausgebildet sind.

8. Turbomaschine (2) nach einem der Ansprüche 1 bis 7, **dadurch gekennzeichnet, dass** der Flansch (32.1) in einer stromabwärtigen Hälfte des Wärmetauschers (18) angeordnet ist und dass stromabwärts des Flansches (32.1) der Wärmetauscher (18) ferner einen stromabwärtigen Abschnitt (40) umfasst, an dem eine Feuerschutzwand (46) angebracht ist, die einen Wärmeschutzschild bildet.

9. Verfahren zum Ausbau eines Wärmetauschers (18) in einer Turbomaschine (2) nach einem der Ansprüche 1 bis 8, wobei das Verfahren die folgenden Schritte umfasst:
- Lösen der Befestigungselemente (33) des Flansches (32.1) vom Gehäuse (28);
- Demontage der Befestigungselemente (33) der Flansch (32.1) am Gehäuse (28)
- Ausbau des Wärmetauschers (18) durch eine axial nach stromabwärts gerichtete Verschiebung.

10. Verfahren zum Einbau eines Wärmetauschers (18) in einer Turbomaschine (2) nach einem der Ansprüche 1 bis 8, wobei das Verfahren die folgenden Schritte umfasst:
- Einbau des Wärmetauschers (18) durch eine axial nach stromaufwärts gerichtete Bewegung;
- Befestigen der Befestigungselemente (33) des Flansches (32.1) an dem Gehäuse (28).

## Claims

1. Turbomachine (2), comprising:
- a first splitter nose (10) configured to separate an incoming air flow (F) into a radially inner air flow (F') and a radially outer air flow (F2), referred to as a secondary flow (F2);
- a second splitter nose (14) configured to separate the radially inner air flow (F') into a primary flow (F1) and a tertiary flow (F3), the tertiary flow (F3) flowing through a tertiary flow duct (16) that is radially external to a primary flow duct (16) through which the primary flow (F1) flows;
- a heat exchanger (18) arranged in the tertiary flow duct (16); and
- an inner casing (28);
the turbomachine (2) being **characterized in that**
the heat exchanger (18) comprises a body (32) and a flange (32.1) extending radially inward and projecting from the body (32), the flange being fastened to the inner casing (28), the heat exchanger (18) further comprising, upstream of the flange (32.1), an upstream portion (50) comprising a collar (52) projecting from the body (32) of the heat exchanger (18) and extending upstream therefrom, the collar (52) being received in a floating manner in a groove (54) extending circumferentially in the inner casing (28).

2. Turbomachine (2) according to claim 1, **characterized in that** the fastening flange (32.1) extends circumferentially over at most 50% of a circumferential extent of the heat exchanger (18).

3. Turbomachine (2) according to one of claims 1 and 2, **characterized in that** the fastening flange (32.1) is arranged in a central position of the heat exchanger (18), in a circumferential direction.

4. Turbomachine (2) according to one of claims 1 to 3, **characterized in that** the flange (32.1) is fastened to the casing (28) by fastening elements (33) allowing blind fastening.

5. Turbomachine (2) according to one of claims 1 to 4, **characterized in that** it comprises a first thermal insulating seal (56) arranged in the groove (54) and interposed between the casing (28) and the heat exchanger (18).

6. Turbomachine (2) according to one of claims 1 to 5, **characterized in that** it comprises structural arms (34) extending radially through the tertiary flow duct (16) and defining between them inter-arm spaces (36), the turbomachine (2) comprising a heat exchanger (18) in each inter-arm space (36), each heat exchanger (18) comprising a body (32) and a flange (32.1) extending radially inward and projecting from the respective body (32), each flange (32.1) being fastened to the inner casing (28), and each heat exchanger (18) further comprising a lateral thermal insulating seal (60) interposed between the heat exchanger (18) and the adjacent structural arm (34).

7. Turbomachine (2) according to claims 5 and 6, **characterized in that** each heat exchanger (18) comprises the first seal (56) and two lateral thermal insulating seals (60), said lateral seals (60) being formed integrally with the first seal (56).

8. Turbomachine (2) according to one of claims 1 to 7, **characterized in that** the flange (32.1) is arranged in a downstream half of the heat exchanger (18), and downstream of said flange (32.1), the heat exchanger (18) further comprises a downstream portion (40) to which is attached a fire wall (46) forming a thermal shield.

9. Method for removing a heat exchanger (18) in a turbomachine (2) according to one of claims 1 to 8, the method comprising the following steps:
- dismantling fastening elements (33) of the flange (32.1) from the casing (28); and
- removing the heat exchanger (18) by an axially downstream displacement.

10. Method for installing a heat exchanger (18) in a turbomachine (2) according to one of claims 1 to 8, the method comprising the following steps:
- installing the heat exchanger (18) by an axially upstream displacement; and
- fastening the fastening elements (33) of the flange (32.1) to the casing (28).
